# EUROPEAN PATENT APPLICATION

(11) **EP 2 395 234 A2**
(43) Date of publication of application: **14.12.2011**
(21) Application number: 11162643.8
(22) Date of filing: 15.04.2011
(51) Int. Cl.: F03D 1/02, F03D 3/02

(54) **Tunnel Power Turbine System to generate potential energy from waste kinetic energy**

(30) Priority: 15.04.2010 PK 3122010
(71) Applicant: Ur Rehman Alvi, Mujeeb, Karachi 75500 (PK)
(72) Inventor: Ur Rehman Alvi, Mujeeb, Karachi 75500 (PK)
(74) Representative: Carter, Stephen John

(57) **Abstract**

"TUNNEL POWER TURBINE SYSTEM to GENERATE POTENTIAL ENERGY from WASTE KINETIC ENERGY"; has three DEVICES; main hub of Potential Energy Generation is "TUNNEL POWER TURBINE SYSTEM" (Figures 1 & 2); inside it has an internal DEVICE; I) "TUNNEL POWER DEVICE"; other two external DEVICES are; II) "SHROUDED FUNNEL DEVICE" (Figures 3 and 4), and; III) "TEMPERATURE CONTROL DEVICE" (Figure 5).

## Description

### BACKGROUND of the INVENTION:

I. Source of WASTE KINETIC ENERGY: Our cities: **"HEAT ISLANDS"** are massive WASTE KINETIC ENERGY source; High rise RESIDENCES (kitchen, household devices, air conditioners, generators, etc), COMMERCIAL ACTIVITY, INDUSTRIES, POWER PLANTS, etc ( where ever heat, hot radiator air & flue etc exists); useless WASTE KINETIC ENERGY is dissipated in the air the easy way; further the high se structures soaks-up / retains heat from; sun, commercial and intense traffic exhaust; the bigger the city the larger is the **"HEAT ISLAND".** Just imagine the enormous WASTE KINETIC ENERGY ejected / dissipated in air / wind from one man made structure; *Burj Khalifa - Dubai; the worlds tallest*; 160 Floors - 828 meters (2,717 feet) high.
II. Field of the Invention: This invention relates to POTENTIAL ENERGY GENERATED from useless WASTE KINETIC ENERGY, wherein the useless WASTE is galvanized, activated, incited and stimulated from DORMANT STATE into POTENTIAL ENERGY.
III. Prior Art: Known Scientific Principals in prior art as per below; are integrated, amalgamated and incorporated in the innovative System invention of POTENTIAL ENERGY GENERATION from WASTE KINETIC ENERGY in DORMANT STATE - wherein it induces a new dimension of function, purpose, increases System's efficiency many folds.

1: "WIND TURBINES FARMS":
   (a) The cardinal principal involved in Wind Turbines Power Generation; a 20% increase in the wind velocity - increases the power generated with 73%, despite, AIR density decreases with temperature and altitude; "*MAJOR FACTOR in POWER GENERATION is WIND VELOCITY³".*
   (b) Windmills can not operate at 100% efficiency because the *structure itself impedes the flow of the wind. The structure also exerts back pressure on the turbine blades* as they act like an air foil (a wing on an airplane), the average efficiency of Wind Turbine is around 20%.
   (c) The basics of Wind Kinetic Energy; '**P**' (Power KW) attainable is: '**P**' = ½**pAV**³ i.e. 0.5 X **p** (Mass Kg/m²) X **A** (Fan Area - sq. meters) X **V**³ (Velocity - meters per second³) = KW.
2: "HOT AIR BALLOONS": Air Pressure Increase with Temperature - *Hot air is less dense than cold air and therefore is buoyant and rises, it exerts Vertical Pressure to lift.*
3: "VERTICAL WIND TUNNEL": "INDOOR SKYDIVING" enables human beings to FLY in air, through the FORCE of WIND being generated VERTICALLY. The cardinal PRINCIPAL of a *TUNNEL* is; *"a 2^{ND}* *PRESSURE known as STATIC PRESSURE is always present in a DUCT* / *TUNNEL* / *PIPE; it acts equally in all SIDES of the CONDUIT - independent of VELOCITY or its MOVEMENT DIRECTION".*
4: "WIND HOPPER": *Captures EXTERNAL WIND for Power Generation* as disclosed by Mujeeb R. Alvi in *Pakistan Patent No.* 128764 issued 30th November, 1985 is generally known, but does not perform the function in the manner of this invention.

### The Present Invention:

The present invention is quite different from the conventional Windmills or Cogeneration system producing renewable energy for a number of reasons as per below:-
a) The conventional Wind Turbine Farms, the turbine towers are very high (80 meters or more) and very heavy (450 tons or more each) producing up to 3 MW of Energy, present invention eliminates the use of gigantic and extremely heavy high Towers and gets rid of logistics problems thereof - more difficult to produce, fabricate, transport and install.
b) The average efficiency of conventional Wind Farms is low - 20 % for reason; the structure itself impedes the flow of the wind and also exerts back pressure on the turbine blades; whereas the present intention is free from such impediments the efficiency is 95⁺ %.
c) In conventional Windmills, generation depends on highly erratic wind velocity and direction - a highly variable factor, whereas; the present invention has an added advantage of *STATIC PRESSURE (TUNNEL)* which gives the System CONSISTENCY of direction and VELOCITY that can be managed, controlled and regulated.
d) In Cogeneration system; the FLUE HEAT is utilized to generate STEAM in Boiler for more Power generation and also heats water for circulation, but thereafter the exiting FLUE after shedding part HEAT is simply dissipated in the Environment as useless Waste Energy.

### Innovative Features:

"TUNNEL POWER TURBINE SYSTEM" to "GENERATE POTENTIAL ENERGY from WASTE KINETIC ENERGY"; the System has following innovative features:
1. The "TUNNEL POWER TURBINE" is the only SYSTEM in the world that galvanizes, activates, incites and stimulates useless "WASTE KINETIC ENERGY" from DORMANT STATE to GENERATE POTENTIAL ENERGY without FUEL USAGE or ENVIRONMENT POLLUTION or GREENHOUSE GAS (CARBON) EMISSION increase.
2. The "TUNNEL POWER TURBINE" System to GENERATE POTENTIAL ENERGY; is located where most useless WASTE KINETIC ENERGY originates and produced but more ENERGY is required.
3. The "TUNNEL POWER TURBINE" is the only System in the world that encompass and incorporates all known Scientific Principals on which other different systems individually operate, viz. as under:-
   (a) "WIND TURBINES FARMS": "MAJOR FACTOR in POWER GENERATION is WIND VELOCITY³".
   (b) "HOT AIR BALLOONS": "Hot air is less dense than cold air, therefore it is buoyant and rises, it exerts Vertical Pressure to lift."
   (c) "VERTICAL WIND TUNNEL":"a *2^{ND} PRESSURE known as STATIC PRESSURE is always present in a DUCT l TUNNEL* / *PIPE; it acts equally in all SIDES of the CONDUIT - independent of VELOCITY or its MOVEMENT DIRECTION".*
   (d) "WIND HOPPER" "Captures EXTERNAL WIND for Power Generation" Pakistan Patent No. 128764 issued 30th November, 1985
4. The three DEVICES of "TUNNEL POWER TURBINE System" to GENERATE POTENTIAL ENERGY from useless WASTE KINETIC ENERGY, are; (I) "TUNNEL POWER DEVICE" (internal DEVICE); (II) "SHROUDED FUNNEL DEVICE" (external DEVICE), and; (III) "TEMPERATURE CONTROL DEVICE" (external DEVICE;), have similar EJECTOR CONTRAPTION Mechanism; while two COMPONENTS; (I) "TUNNEL POWER DEVICE" and (II) "SHROUDED FUNNEL DEVICE" have additional similar DEFUSER Mechanism; the function / operation of the respective DEVICES are identical as per below:-
   (i) The EJECTOR CONTRAPTION BODY MECHANISM in all the three DEVICES is identical. The CONTRAPTION BODY has an INLET - is built and incorporated around the TUNNEL Body; a *SLIT* is cut in the TUNNEL Body circumference parameter at an inclined angle to form a SLIT VENTURI concealed inside the Contraption Body - it opens in TUNNEL passage; through CONTRAPTION BODY INLET - useless WASTE KINETIC ENERGY is inducted under pressure - is SELF EJECTED with VELOCITY PRESSURE through the SLIT VENTURI into TUNNEL passage at an inclined angle where it creates VORTEX above SLIT VENTURI outlet and VACUUM below SLIT VENTURI outlet and sucks more low pressure useless WASTE KINETIC ENERGY or EXTERNAL AIR as required through TUNNEL passage opening below therein. The only difference is FLOW direction. Figures: 1, 3 and 5.
   (ii) The DEFUSER MECHANISM; in two DEVICES excluding "TEMPERATURE CONROL DEVICE"; the plates are erected vertically and fixed against the TUNNEL passage wall -the plates edge are at an angle faces flow direction - effectually changes the VORTEX ROTATIONAL movement into LINEAR movement - accelerates LINEAR VELOCITY PRESSURE inside the TUNNEL passage - Figures: 1 and 3.
   (iii) The second DEVICE; "SHROUDED FUNNEL" has an additional feature; it is fitted with a vertical SHAFT - connected to a LARGE HEMISPHERICAL DEVICE above the "SHROUDED FUNNEL INLETS", and FAN below the "SHROUDED FUNNEL INLETS", WIND POWER from any direction rotates the SHAFT and FAN at high speed - greatly intensifies MOTION and PRESSURE to sucked EXTERNAL WIND through all SHROUDED FUNNEL INLETS - Figures: 3 and 4.
5. The third DEVICE; "TEMPERATURE CONTROL DEVICE"; comprises of a number of casings / stages; inducts cool air at every stage to reduce the high TEMPERATURE FACTOR of BLEND {Radiator HEATED AIR (75°C) + EXHAUST FLUE (484°C)} to a reasonable safety level, whereby it greatly increases the VOLUME and VELOCITY PRESSURE of OUTPUT MIXTURE of WASTE KINETIC ENERGY to be fed into the "TUNNEL POWER TURBINE" System for POTENTIAL ENERGY GENERATION - Figures: 1 and 5.

### Brief description of the Drawings:

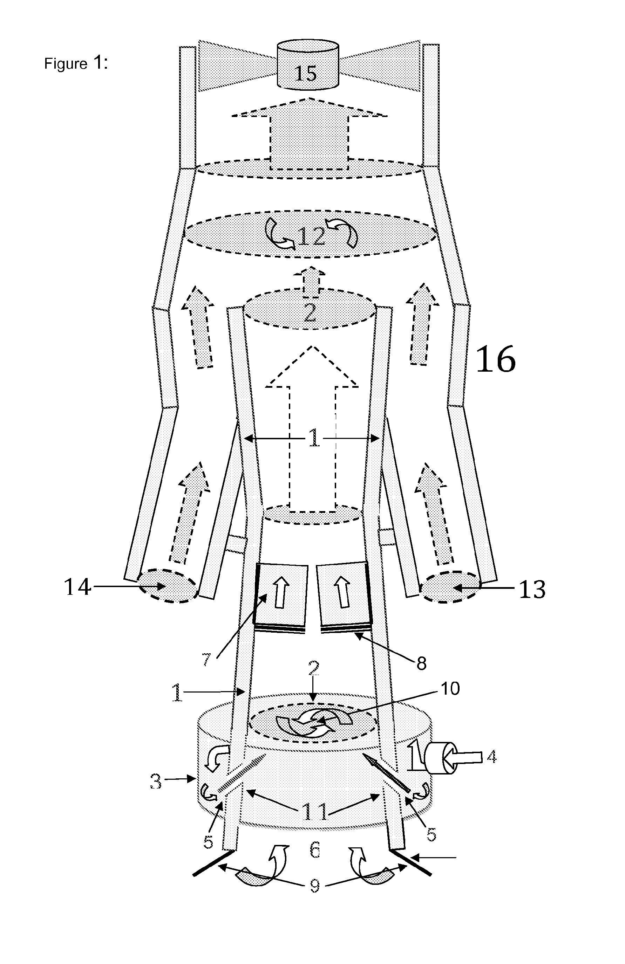

- Figure 1: is a perspective view of the invention; TUNNEL POWER TURBINE SYSTEM hub of POTENTIAL ENERGY GENERATION from useless WASTE KINETIC ENERGY, shows; a LARGE BODY of "TUNNEL POWER TURBINE SYSTEM" shrouds an internal DEVICE - "TUNNEL POWER DEVICE"; the DEVICE has an EJECTOR CONTRAPTION BODY - made and incorporated around the TUNNEL BODY wherein a SLIT VENTURI outlet is integrated in TUNNEL BODY concealed inside the CONTRAPTION BODY opening into the TUNNEL BODY passage and DEFUSER System made / erected inside the TUNNEL passage. The LARGE BODY of "TUNNEL POWER TURBINE SYSTEM" has additional two external INLETS to receive auxiliary ENERGY: (1) from Shrouded Funnel DEVICE (WASTE KINETIC ENERGY + EXTERNAL AIR), and; (2) from Temperature Control DEVICE (HOT RADIATOR AIR + FLUE + COOL AIR MIXTURE); all ENERGIES from the three DEVICES merge in the LARGE CHAMBER of the "TUNNEL POWER TURBINE SYSTEM" - increases VOLUME and VELOCITY PRESSURE therein - drives Generator, installed where appropriate to avoid bulky hefty weight of Generator on fragile Structure of the SYSTEM.

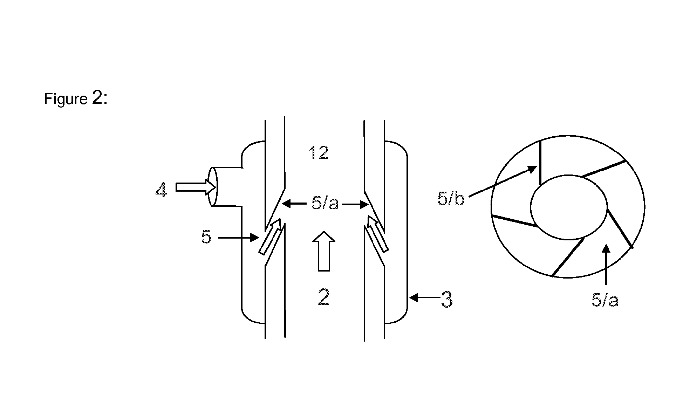

- Figure 2: is a perspective cross section view of the SLIT VENTURI OUTLET - cut at an inclined angle in Tunnel Body circumference concealed inside EJECTOR CONTRAPTION BODY shows; the SLIT VENTURI angle SLOPE on which BARRIERS are fixed at an angle to regulate the VORTEX spiral magnitude, if, when and where required.

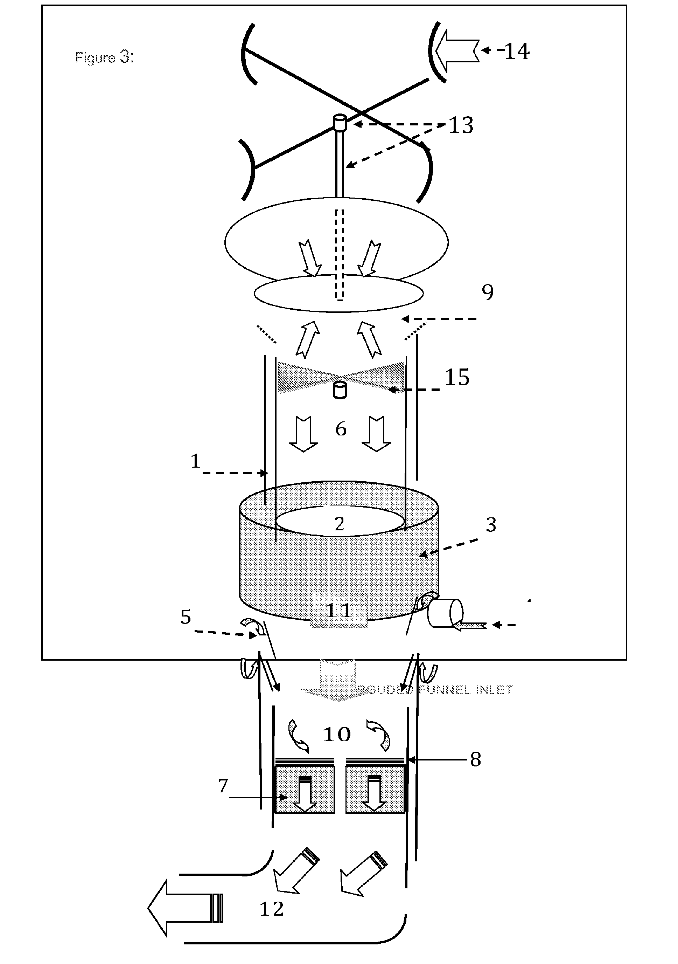

- Figure 3: is a perspective view of second external DEVICE - "SHROUDED FUNNEL", shows; similar EJECTOR CONTRAPTION with concealed SLIT VENTURI OUTLET and DEFUSER System therein; the "SHROUDED FUNNEL" has an additional feature - has a vertical SHAFT connected to a LARGE HEMISPHERICAL DEVICE above the "FUNNEL INLETS", and FAN below "FUNNEL INLETS".

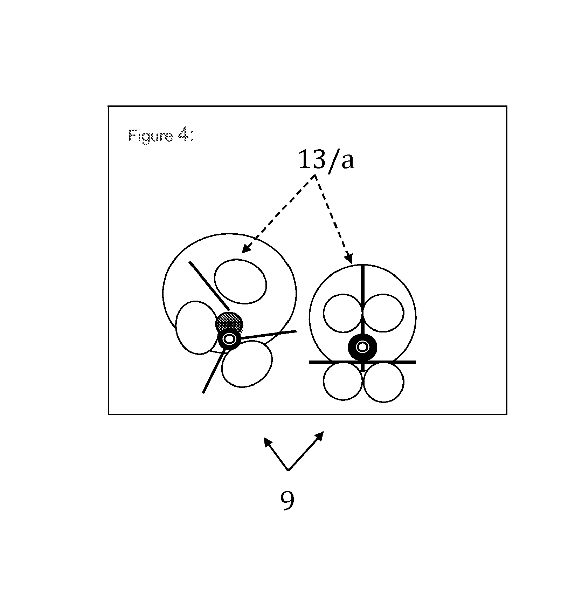

- Figure 4: is a perspective cross section view of the MIDPOINT of SHROUDED FUNNEL through which the VERTICAL DRIVING SHAFT passes and connects the HEMISPHERICAL DEVICE above the "FUNNEL INLETS", and FAN below "FUNNEL INLETS".

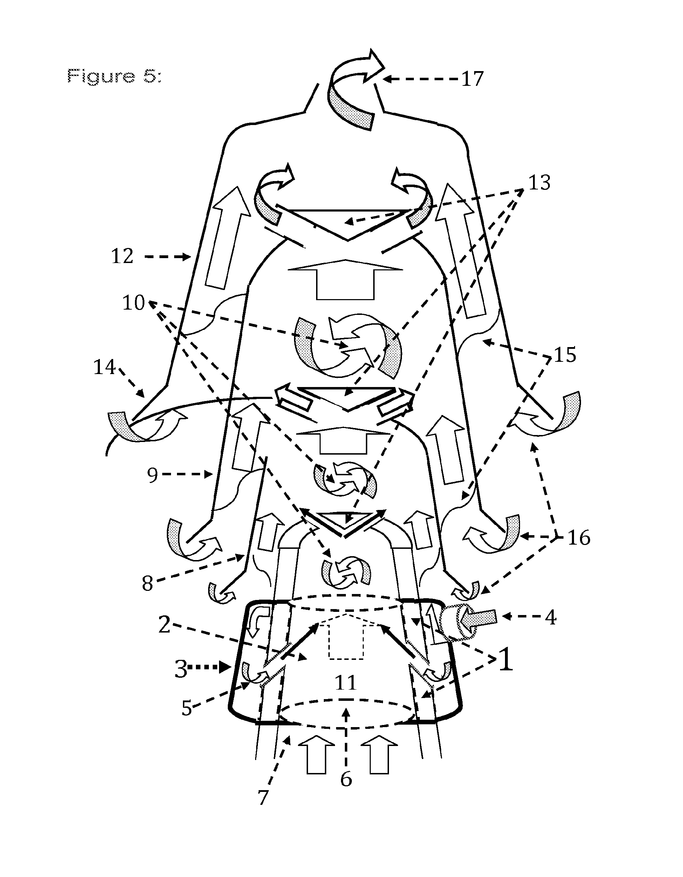

- Figure 5: is a perspective view of third external DEVICE - "TEMPERATURE CONTROL DEVICE" shows; EJECTOR CONTRAPTION and SLIT VENTURI concealed therein; has a number of casings and stages with Outlets and Inlets at every stage.

### Detailed description of the Drawings:

The features, objects and advantages of the Invention will be fully understood from the following detailed description of accompanying drawings, in which:
- Figure 1: "TUNNEL POWER TURBINE SYSTEM"; hub of POTENTIAL ENERGY GENERATION - from useless WASTE KINETIC ENERGY; a perspective view of the invention; wherein it shows;
The "TUNNEL POWER TURBINE SYSTEM" 16 is erected vertically for better performance as WASTE KINETIC ENERGY (GAS) is *buoyant* / *rises - exerts Vertical Pressure;* the SYSTEM'S LARGE BODY 16 shrouds an internal DEVICE: "TUNNEL POWER DEVICE" 1 to 11; wherein the DEVICE 1 has an EJECTOR CONTRAPTION 3 built and incorporated around the TUNNEL BODY 1 with an INLET 4 through which useless WASTE KINETIC ENERGY under pressure is induct in CONTRAPTION BODY 3; wherein it is SELF EJECTED with greater VELOCITY PRESSURE through concealed SLIT VENTURI 5 into the TUNNEL passage 2 at an inclined angle where it creates VORTEX 10 above SLIT VENTURI outlet 5 and VACUUM 11 below SLIT VENTURI outlet 5 in TUNNEL passage 2 - sucks more WASTE KINETIC ENERGY 6 through the TUNNEL SHROUDED OPEN INLET 9 in the base of the TUNNEL passage 2 wherein the DEFUSER PLATES 7 are erected vertically - fixed against TUNNEL passage wall - PLATES ANGLE 8 edge faces flow direction - changes VORTEX ROTATION movement into LINEAR movement increases LINEAR Velocity enters CHAMBER 12 of SYSTEM'S LARGE BODY 16 wherein there are TWO additional external INLETS to receive extra ENERGY', viz; (a) WASTE KINETIC ENERGY + EXTERNAL AIR from external DEVICE (Shrouded Funnel DEVICE) through INLET 13, and; (b) HOT RADIATOR AIR + FLUE + COOL AIR MIXTURE from external DEVICE (Temperature Control DEVICE) through INLET 14; wherein useless WASTE KINETIC ENERGY from three DEVICES, viz; TUNNEL 2, INLET 13 and INLET 14 - all merge in CHAMBER 12 of SYSTEM'S LARGE BODY 16; increases VOLUME and VELOCITY PRESSURE of WASTE KINETIC ENERGY; drives GENERATOR 15; installed where appropriate to avoid bulky hefty weight of Generator on System's fragile structure.
Figure 2 is a cross section view of the SLIT VENTURI 5 Figure 1; concealed inside EJECTOR CONTRAPTION BODY 3 the SLIT VENTURI SLOPE 5/a on which BARRIERS 5/b are fixed at an angle - regulates spiral magnitude of the VORTEX 10 if, where and when as required.
Figure 3 the second external DEVICE ("SHROUDED FUNNEL DEVICE"); a perspective view of the invention; it has similar EJECTOR CONTRAPTION BODY and DEFUSER as in Figure 1; shows an additional feature; a HEMISPHERICAL DEVICE fixed on a vertical SHAFT; above the SHROUDED FUNNEL INLETS connected to a FAN below "SHROUDED FUNNEL INLETS"; Figures: 3 and 4; wherein it shows;
   TUNNEL BODY 1; EJECTOR CONTRAPTION BODY 3 is built & incorporated around the TUNNEL BODY 1 with an INLET 4 through which WASTE KINETIC ENERGY under pressure is induct into the CONTRAPTION BODY 3; it is self ejected with greater velocity through SLIT VENTURI 5 opening in TUNNEL passage 2; wherein it creates VORTEX 10 below the SLIT VENTURI OUTLET 5 and VACUUM 11 above the SLIT VENTURI OUTLET 5 in the TUNNEL passage 2 and sucks in more EXTERNAL AIR 6 through SHROUDED INLETS 9 above; DEFUSER PLATES 7 are erected vertically - fixed against TUNNEL passage wall - PLATES ANGLE 8 edge faces flow direction - changes VORTEX ROTATION movement into LINEAR movement increases LINEAR Velocity of MIXTURE to EXIT 12; additional feature of the "SHROUDED FUNNEL" 9 has three or four joined "INLETS" facing different directions - Figure 4, VERTICAL DRIVING SHAFT 13 passes through joining midpoint of the "INLETS" 13/a - Figure 4, DRIVING SHAFT 13 connects the HEMISPHERICAL CUP DEVICE 14 above the "SHROUDED FUNNEL INLETS" 9 (Figure 3) and FAN 15 below "SHROUDED FUNNEL INLETS" 9 (Figure 4); WIND POWER from any direction rotates the HEMISPHERICAL CUP DEVICE 14 which rotates the FAN 15 below at high speed - greatly increases VELOCITY of the sucked in external WIND 6 through the SHROUDED FUNNEL INLETS - Figure 3.
Figure 4 is a cross section view of the "SHROUDED FUNNEL INLETS"; wherein it shows; SHROUDED FUNNEL has three or four joined separate equal AIR INLETS 9 and; a VERTICAL DRIVING SHAFT 14, which pass through the midpoint of SHROUDED FUNNELS INLETS 13/a - Figure 4.
Figure 5: the third external DEVICE ("TEMPERATURE CONTROL DEVICE") a perspective view of the invention; has a similar EJECTOR CONTRAPTION with SLIT VENTURI concealed therein; in addition it has a number of CASINGS on top of each other with SLIT VENTURI Outlets and Air Inlets at every stage; wherein it shows;
   TUNNEL BODY 1 is the first CASING stage of the DEVICE; EJECTOR CONTRAPTION BODY 3 built & incorporated around the TUNNEL BODY 1 with an INLET 4 through which high TEMPERATURE BLEND {Radiator HEATED AIR (75°C) + EXHAUST FLUE (484°C)} under velocity pressure is induct into the CONTRAPTION BODY 3; it is SELF EJECTED into TUNNEL Passage 2 through SLIT VENTURI 5 integrated in TUNNEL BODY concealed inside CONTRAPTION BODY 3 wherein it creates VORTEX 10 in the TUNNEL Passage 2 above the SLIT VENTURI OUTLET 5 and VACUUM 11 below the SLIT VENTURI OUTLET 5 in the TUNNEL Passage 2 and sucks in EXTERNAL AIR 6 through INLET 7 below, the second 8, third 9 and final 12 are CASING STAGES of the DEVICE on top of each other; each CASING of the DEVICE has an OUTLET SLIT VENTURI 13; each CASING of the DEVICE has a SHROUDED Air Inlets 14, STRIP 15 separates, holds in position and provides passage between each CASING of the DEVICE for COOL Air Inlet Passage 16, and MIXTURE OUTLET 17 .

For ease of understanding; the EJECTOR CONTRAPTION 3 System in all THREE DEVICES is similar and accordingly the part numbers are same. Similarly the DEFUSER 7 & 8 System is identical in TWO COMPONENTS and accordingly the part numbers are also identical.

Paragraphs summarizing the invention:
a: "TUNNEL POWER TURBINE SYSTEM" to "GENERATE POTENTIAL ENERGY from useless WASTE KINETIC ENERGY"; wherein; the SYSTEM has THREE DEVICES; 1) "TUNNEL POWER DEVICE" (internal); 2) "SHROUDED FUNNEL DEVICE" (external), and; "TEMPERATURE CONTROL DEVICE" (external).
b: "TUNNEL POWER TURBINE SYSTEM"; as summarized in paragraph a; more particularly activates huge ENERGY GENERATION POTENTIAL inherently present in useless WASTE KINETIC ENERGY presently dissipated in the environment.
c: "TUNNEL POWER TURBINE SYSTEM"; as summarized in paragraphs a & b; wherein the LARGE BODY 16 of "TUNNEL POWER TURBINE SYSTEM" shrouds an internal "TUNNEL POWER DEVICE" 1 to 11; also has TWO additional external INLETS for auxiliary ENERGY from; external "SHROUDED FUNNEL DEVICE" INLET 13, and; external "TEMPERATURE CONTROL DEVICE" INLET 14.
d: "TUNNEL POWER DEVICE" (internal) of "TUNNEL POWER TURBINE SYSTEM"; as summarized in paragraphs a & c; comprises of; EJECTOR CONTRAPTION BODY 3 with an INLET 4; incorporated and built around TUNNEL BODY 1 just above the TUNNEL open INLET 6; SLIT VENTURI 5 integrated in the TUNNEL BODY 1 concealed inside the CONTRAPTION BODY 3 opens into TUNNEL passage 2; and DEFUSER PLATES 7 erected vertically - fixed against TUNNEL Wall and the PLATES ANGLE 8 edge faces flow direction in TUNNEL passage 2 enhances VOLUME and VELOCITY of inducted WASTE KINETIC ENERGY and exits out from the internal DEVICE through TUNNEL passage 2 into Chamber 12 of the Large Bodied "TUNNEL POWER TURBINE SYSTEM" 16.
e: "SHROUDED FUNNEL DEVICE" (external) of "TUNNEL POWER TURBINE SYSTEM"; as summarized in paragraph a has an additional feature; is fitted with a vertical SHAFT 13 - connected to a LARGE HEMISPHERICAL DEVICE 14 above SHROUDED FUNNEL INLETS 9 and FAN 15 below SHROUDED FUNNEL INLETS, WIND POWER 14 from any direction rotates the SHAFT 13 and FAN 15 at high speed - enhances VELOCITY to sucked in EXTERNAL WIND through above SHROUDED FUNNEL multi INLETS 9.
f: "SHROUDED FUNNEL DEVICE"; as summarized in paragraphs a & e; comprises of EJECTOR CONTRAPTION BODY 3 with an INLET 4 incorporated and built around the TUNNEL BODY 1; SLIT VENTURI 5 integrated in the TUNNEL BODY 1 concealed inside CONTRAPTION BODY 3 opens into TUNNEL passage 2 - wherein DEFUSER PLATES 7 are erected vertically fixed against TUNNEL Wall - PLATES ANGLE 8 edge faces flow direction in TUNNEL passage 2 - further enhances VOLUME and VELOCITY of in coming Wind through FUNNEL INLETS 9, and is ejected through OUTLET 12.
g: "TEMPERATURE CONTROL DEVICE" (external) of "TUNNEL POWER TURBINE SYSTEM"; as summarized in paragraph a, controls HIGH TEMPERATURE FACTOR of huge volume of WASTE KINETIC ENERGY dissipated from GENERATORS in the form of; (a) Radiator HEATED AIR (75°⁺C) and; (b) EXHAUST FLUE (484°⁺C); VOLUME RATIO of two is approximately 11.3 : 1; also comprises of; EJECTOR CONTRAPTION BODY 3 INLET 4 incorporated and built around the TUNNEL BODY 1; SLIT VENTURI 5 integrated in the TUNNEL BODY 1 concealed inside EJECTOR CONTRAPTION BODY 3 opens in TUNNEL passage 2; the Hot Radiator Air + Flue is inducted in EJECTOR CONTRAPTION BODY 3 through INLET 4 which is self ejected through VENTURI 5 in TUNNEL passage 2 wherein VORTEX 10 forms and causes VACCUM 11 - sucks in cool air through INLET 6 which is again self ejected through VENTURI OUTLETS 13 on top of each CASING 1, 8, 9 & 12 and sucks in more COOL AIR through SUCTION INLETS 16 at each STAGE of the DEVICE to reduce temperature; enhances VOLUME and VELOCITY of the MIXTURE and is finally ejected through OUTLET 17.
h: "TEMPERATURE CONTROL DEVICE"; as summarized in paragraph g, has a number of CASINGS 1, 8, 9 & 12; the larger CASING shrouds the smaller CASING in sequence, in between body space of two CASINGS a number of vertical strips 15 encircles outside around each inner smaller CASING body at an inclined angle of precise width which provides specific space between the OUTER larger Casing Body and INNER smaller CASING Body - thus separates and holds each CASING 1, 8, 9 & 12 in place; also creates a number of inclined passages in between the OUTER larger Casing and INNER smaller CASING through which COOL AIR is sucked into the base of outer next CASING; the strips act as HEAT SINK to transfer heat from the smaller inner CASING Body to the COOL AIR passing between two strips - absorbs heat from strips and inner CASING Body also; becomes buoyant - is sucked in at a greater VELOCITY through the Shrouded AIR Inlet into the BASE of the next STAGE; each CASING has a VENTURI OUTLET 13 on top of each CASING Body and AIR SUCTION INLET 16 at the base of every CASING.
i: "TUNNEL POWER TURBINE SYSTEM"; as summarized in preceding paragraphs, the LARGE BODY 16 of "TUNNEL POWER TURBINE SYSTEM" shrouds the "TUNNEL POWER TURBINE DEVICE" 1 to 11 its TUNNEL Passage 2 opens in Chamber 12 of "TUNNEL POWER TURBINE SYSTEM" 16; wherein Chamber 12 also receives additional auxiliary WASTE KINETIC ENERGY'S through TWO separate external INLETS 13 & 14 viz: (a) "SHROUDED FUNNEL DEVICE" through INLET 13 and; (b) "TEMPERATURE CONTROL DEVICE" through INLET 14; wherein in Chamber 12 of the SYSTEM 16 the three incoming WASTE KINETIC ENERGIES - from TUNNEL 2, INLET 13 and INLET 14 all merge to collectively increase VOLUME and VELOCITY PRESSURE of the so accrued WASTE KINETIC ENERGY in chamber 12.
j: "TUNNEL POWER TURBINE SYSTEM"; as summarized in paragraphs i; more particularly the **WASTE KINETIC ENERGY from TUNNEL 2, INLET 13 and INLET 14 merged in Chamber 12 of SYSTEM 16 accelerates flow from LOW VELOCITY to HIGH VELOCITY - STATIC PRESSURE ensures NO VELOCITY PRESSURE dissipates or is lost as in conventional Wind Turbine Farms; but exerts utmost VELOCITY PRESSURE on Generator Fan Blades 15 enclosed in tunnel - generates POTENTIAL KILOWATT HOURS (KWh) without fuel usage, dissipated in environment with NO pollution / temperature increase, still has VELOCITY PRESSURE - reclaimed / reused to enhance generation capability as and when required.**
k: "TUNNEL POWER TURBINE SYSTEM" as summarized in paragraphs d, f & g the **useless** WASTE KINETIC ENERGY inducted in EJECTOR CONTRAPTION BODY 3 under VELOCITY PRESSURE through INLET 4 is self **ejected into TUNNEL passage** 2 through SLIT VENTURI 5 **built-in TUNNEL BODY 1** concealed inside CONTRAPTION BODY 3 at an INCLINED ANGLE; therein it causes **formation of;** VORTEX 10 above the SLIT VENTURI OUTLET 5 and VACUUM 11 below the SLIT VENTURI OUTLET 5 - sucks in more low pressure WASTE KINETIC ENERGY or EXTERNAL WIND/AIR as available or required through INLET 6; whereby **it accelerates flow of WASTE KINETIC ENERGY with VOLUME increase from LOW VELOCITY to HIGH VELOCITY** - increases ENERGY GENERATION potential capability of "TUNNEL POWER TURBINE SYSTEM".
l: "TUNNEL POWER TURBINE SYSTEM"; as summarized in paragraphs a, d, & f; further including; the DEFUSER System built inside TUNNEL passage 2; wherein it effectually changes the VORTEX ROTATIONAL movement into LINEAR movement; accelerates the LINEAR VELOCITY of the inducted WASTE KINETIC ENERGY + sucked in air and wind through the INLET; the VORTEX Axle Flow of rotational VELOCITY movement solely depends on the VORTEX SPIRAL magnitude (length); it can be elongated / shortened - by changing the horizontal exit ANGLE by placing barriers 5/b on the incline Slope 5/a of the SLIT VENTURI 5 to change the exit angle flow - increases / decreases the VORTEX SPIRAL magnitude (length) - effects the Axle Flow of LINEAR VELOCITY movement.
m: "TUNNEL POWER TURBINE SYSTEM " as summarized in preceding paragraphs, more particularly; useless WASTE KINETIC ENERGY is NOT dissipated in environment but COLLECTED - ACCUMULATED and supplemented with external AIR - transforming it from LOW to HIGH VELOCITY PRESSURE KINETIC ENERGY to GENERATE POTENTIAL ENERGY; SYSTEM setup COLLECTS useless WASTE KINETIC ENERGY from all HEAT EMITTING sources whereof use of ducts, fans, blowers, etc are incorporated in *old Building structures -* the SYSTEM is *individually designed, perfected and installed* therein; but in New Building Construction - Design is incorporated / integrated to self induct and collect HEAT from all HEAT EMITTING sources, further; HEAT SINK Profiles are install on the Roof / Walls etc to COLLECT - transfer maximum SOLAR HEAT into Ducts or inbuilt Ducts to heat / expand the AIR flowing through the ducts to acquire more potential energy momentum.
n: "TUNNEL POWER TURBINE SYSTEM"; as summarized in paragraphs a & f; wherein the "SHROUDED FUNNEL DEVICE" captures external WIND from any direction; has three or four equal but joined separate "SHROUDED INLETS" 9 to capture external WIND from any direction; provides an opening in "SHROUDS" 13/a mid joining point, through which a vertical shaft passes 13 and connects a LARGE HEMISPHERICAL WIND Power Mechanism DEVICE 14 above "SHROUDED FUNNEL INLETS" and FAN 15 below the "SHROUDED FUNNEL INLETS"; whereof WIND POWER from any direction rotates vertical shaft 13 and FAN 15 below the SHROUDED FUNNEL INLETS at high speed; intensifies external WIND intake and speeds up AIR MOTION and accelerates VELOCITY PRESSURE to the huge volume of external wind sucked in through other SHROUDED FUNNEL multi INLETS not facing the WIND Direction.
o: "TUNNEL POWER TURBINE SYSTEM"; as summarized in preceding paragraphs, wherein TUNNEL STATIC PRESSURE acts equally on the TUNNEL wall - **it demarcates the passageway** for WASTE KINETIC ENERGY / EXTERNAL AIR movement flow inside the TUNNEL independent of VELOCITY or its DIRECTION, the TUNNEL STATIC PRESSURE ensures NO VELOCITY PRESSURE dissipates or is lost as in conventional Wind Turbine Farms; where the STRUCTURE itself impedes AIR / WIND flow and exerts back pressure on the turbine blades; the TUNNEL STATIC PRESSURE in TUNNEL steers WASTE KINETIC ENERGY / EXTERNAL AIR in one direction; exerts utmost VELOCITY PRESSURE on Generator Fan Blades; eliminates back pressure; achieves maximum potential power generation capability; transforms major WIND VELOCITY³ FACTOR Efficiency from 20% in Wind Turbine Farms into Power Generating Efficiency Element of 95%⁺ in "TUNNEL POWER TURBINE SYSTEM".
p: "TUNNEL POWER TURBINE SYSTEM"; TUNNEL POWER TURBINE DEVICE" I [Contraption Body with concealed SLIT VENTURI and DEFUSER System therein] as summarized in paragraphs a, d, e & h; with "SHROUDED FUNNEL" II [with external high speed ROTATING SHAFT; CONTRAPTION BODY with concealed SLIT VENTURI and DEFUSER System therein]; "TEMPERATURE CONTROL DEVICE" III; individually or collectively required to transform useless WASTE KINETIC ENERGY into POTENTIAL ENERGY GENERATION - negates Environmental Temperature and Pollution increase.
q: "TUNNEL POWER TURBINE SYSTEM"; "TUNNEL POWER TURBINE DEVICE" - I; "SHROUDED FUNNEL DEVICE" - II; and "TEMPERATURE CONROL DEVICE" - III; hereinbefore referred to in any one of the preceding paragraphs, is designed, constructed, arranged and adopted to operate substantially as hereinbefore described with reference to and shown respectively in Figures 1, 3 and 5; inclusive of in Figures 2 and 4 of the accompanying drawings.

## Claims

1. A tunnel power turbine system which generates potential energy from waste kinetic energy which greenhouse gas emission is presently dissipated in environment, devoid of velocity pressure and static pressure is acquired before it is dispersed to enhance its potential energy: the system comprises of three devices:
(a) Internal "tunnel power device" (i)
(b) External "shrouded funnel device" (ii); and
(c) External "temperature control device (iii) The internal tunnel power device (1) to (11) is shrouded by tunnel power turbine system's large body (16) which has two additional inlets (13) and (14) through inlet (13) it receives extra waste energy from external shrouded funnel device (ii) which comprises of a shrouded funnel body inlet (9) with a wind power device (13) on top of the shrouds inlet (9) that drives a fan below the shrouded funnel inlets (15) to induct external air / wind under velocity pressure and through inlet (14) it receives extra waste energy from external "temperature control device (iii) which comprises of a number of casings with venturi, inducts cool air at every stage to reduce the high temperature factor of the blend {radiator HEATED AIR (75°c) + EXHAUST FLUE (484°c)}, increases volume / velocity pressure of the mixture (blend + cool air); the three waste energies from three devices (i, ii & iii), outlet (2), inlet (13) and inlet (14) merge in chamber (12) of tunnel power turbine system (16) immensely increases the volume and velocity pressure of exiting waste kinetic energy from tunnel power turbine system outlet (15) that drives generator inside a tunnel and generates potential kilowatt hours (KWh) without any increase in greenhouse gas (carbon) emission in environment, the three merged waste energies from chamber (12) and outlet (15) vents from generator tunnel has velocity / static pressure to be repeatedly used for potential kilowatt hours (KWh) generation before being dispersed in environment.

2. The tunnel power turbine system as claimed in claim 1, wherein mobilizes / activates useless greenhouse gas emission prior to its dissipation in environment the three devices (i), (ii) and (iii) contains greenhouse gas emission in pipe line (tunnel) and supplements with voluminous additional air / wind, imparts velocity pressure / static pressure and activates huge energy generation potential inherently present in waste kinetic energy, more particularly the large body (16) of tunnel power turbine system shrouds a pivotal internal tunnel power device (1) to (11) which has two additional external inlets for enormous auxiliary waste energy, inlet (13) from external shrouded funnel device (ii) and inlet (14) from external temperature control device (iii).

3. The tunnel power turbine system as claimed in claims 1 and 2 wherein the three devices internal tunnel power device (i), external shrouded funnel device (ii) and external temperature control device (iii) comprise of similar ejector contraptions (3) with an inlet (4), incorporated and built around tunnel body (1) just above the tunnel open inlet (6) and tunnel body (1); waste energy under high pressure is inducted in ejector contraption (3) through inlet (4) is self-ejected through slit venturi (5) causes vortex (10) and suction (11) in tunnel passage (2) inducts voluminous external air / wind through opening of shroud inlet (6) even if the inlets shrouds are not facing wind direction.

4. The tunnel power turbine system as claimed in preceding claims, wherein the internal tunnel power device (1) to (11) is shrouded by tunnel power turbine system's (16) inducts voluminous external air / wind through opening (6) and increases volume many folds and enhances velocity pressure of waste kinetic energy then exits out from internal device (i) through tunnel passage (2) into large bodied chamber (12) of the tunnel power turbine system (16).

5. The tunnel power turbine system wherein the external shrouded funnel device (ii) as claimed in claim 1 is fitted with a vertical shaft (13) connected to a large hemispherical device (14) above shrouded funnel joined inlets (9) and fan (15) below shrouded funnel inlets, wind power (14) from any direction rotates the shaft (13) and fan (15) below at high speed, imparts velocity pressure to sucked in external air / wind through shrouded funnel multi inlets (9).

6. The tunnel power turbine system as claimed in claims 4 and 5 wherein the tunnel power device and shrouded funnel device comprise of similar diffuser plates 7 erected vertically and fixed against tunnel wall and the plates angle edge (8) faces flow direction and increases linear flow velocity pressure of waste energy in tunnel (2).

7. The tunnel power turbine system wherein the external temperature control device (iii) as claimed in claim 1 reduces high temperature factor of huge volume of waste kinetic energy dissipated in the environment from generators in the form of:
(a) radiator heated air (75°+c); and
(b) exhaust flue (484°+c);
volume ratio of the above two forms is approximately 11.3 : 1 which also comprises of similar ejector contraption body (3). inlet (4) as in devices (i) and (ii) wherein hot radiator air + flue is inducted in ejector contraption body (3) through inlet (4) is self-ejected through venturi (5) in tunnel passage (2) wherein vortex (10) causes vacuum (11) that sucks in voluminous cool air through inlet (6) which is again self-ejected through venturi outlets (13) on top of each casing 1, 8, 9 and 12 and sucks in more cool air through suction inlets (16) at each stage of the device to reduce temperature factor and increases volume many folds and enhances velocity pressure of the mixture enormously and is finally ejected through outlet (17).

8. The tunnel power turbine system as claimed in claim 7 in which temperature control device has a number of casings (1), (8), (9) and (12) in which the larger casing shrouds the smaller casing in sequence and in between body space of two casings a number of vertical strips (15) encircles outside around each inner smaller casing body at an inclined angle of precise width which provides specific space between the outer larger casing body and inner smaller casing body, thus separates and holds each casing (1), (8), (9) and (12) in place and also creates inclined passages in between the outer larger casing and inner smaller casing through which cool air is sucked into the base of outer next casing while the strips act as heat sink to transfer heat from the smaller inner casing body to the cool air passing between two strips to absorb heat from strips and inner casing body which also becomes buoyant and is sucked in at a greater velocity through the shrouded air inlet into the base of the next stage wherein each casing has a venturi outlet (13) on top of each casing body and air suction inlet (16) at the base of every casing.

9. The tunnel power turbine system as claimed in preceding claims in which the large body (16) of tunnel power turbine system shrouds internal tunnel power turbine device (1) to (11) its tunnel passage (2) opens in large chamber (12) of tunnel power turbine system (16) wherein chamber (12) also receives additional auxiliary waste kinetic energy's through two external inlets that is from shrouded funnel device (ii) through inlet (13) and from temperature control device (iii) through inlet (14) wherein chamber (12) of the system (16) the three incoming waste kinetic energy's from tunnel (2) inlet (13) and inlet (14) all merge to collectively increase volume and velocity pressure of the accrued waste kinetic energy in chamber (12).

10. The tunnel power turbine system as claimed in claim 9 wherein more particularly the three waste energy's from tunnel (2), inlet (13) and inlet (14) merge in chamber (12) of system (16) accelerates flow from low velocity to high velocity and the static pressure demarcates passageway for waste kinetic energy / external air movement flow inside tunnel independent of velocity or its direction that ensures no velocity pressure dissipates or is lost as in conventional wind turbine farms, it exits through outlet (15) and exerts utmost velocity pressure on generator fan blades enclosed in tunnel and achieves maximum potential power generation capability, generates potential kilowatt hours (KWh) without fuel usage and vents from generator tunnel having velocity / static pressure that is repeatedly used for potential kilowatt hours (KWh) generation before being dispersed in environment.

11. The tunnel power turbine system as claimed in claim 7 wherein the diffuser system built inside tunnel passage (2) effectually changes the vortex rotational movement into linear movement that accelerates linear velocity of inducted waste energy + sucked in air / wind through the inlet, the vortex axle flow of rotational velocity movement solely depends on the vortex spiral magnitude (length) which can be elongated / shortened by changing the horizontal exit angle by placing barriers (5/b) on the incline slope (5/a) of the slit venturi (5) to change the exit angle flow to increase / decrease the vortex spiral magnitude (length) that effects the axle flow of linear velocity movement.

12. The tunnel power turbine system as claimed in preceding claims, more particularly, system setup collects useless waste energy from all heat emitting sources, furthermore heat sink profiles are installed on the roof / walls, etc., to collect and transfer maximum solar heat into ducts or inbuilt ducts to heat / expand the air flowing through the ducts to acquire more potential energy momentum.

13. The tunnel power turbine system as claimed in claims 1 and 6 wherein the shrouded funnel device captures external wind from any direction and which has three or four equal but joined separate shrouded inlets (9) to capture external wind from any direction; the system provides an opening in shrouds (13/a) mid joining point through which a vertical shaft (13) passes and connects a large hemispherical wind power mechanism device (14) above shrouded funnel inlets and fan (15) below the shrouded funnel inlets wherein wind power from any direction rotates vertical shaft (13) and fan (15) below the shrouded funnel inlets at high speed, intensifies external wind intake and speeds up air motion and accelerates velocity pressure to the voluminous external wind sucked in through other shrouded funnel multi inlets not facing the wind direction.

14. The tunnel power turbine system as claimed in preceding claims, which comprises of:
a) tunnel power device (i);
b) shrouded funnel device (ii); and
c) temperature control device (iii)
the tunnel power device (i) [contraption body with concealed slit venturi and diffuser system therein] with shrouded funnel device (ii) [with external high speed rotating shaft, contraption body with concealed slit venturi and diffuser system therein] and temperature control device (iii) [contraption body with concealed slit venturi] individually or collectively required to transform useless waste energy into potential energy generation.

15. The tunnel power turbine system which comprises of tunnel power device (i), shrouded funnel device (ii) and temperature control device (iii) as hereinbefore referred to in any one of the preceding claims, is individually or collectively designed, constructed, arranged and adopted to operate substantially as hereinbefore described with reference to the accompanying drawings.
